# EUROPEAN PATENT APPLICATION

(11) **EP 0 939 378 A2**
(43) Date of publication of application: **01.09.1999**
(21) Application number: 99301406.7
(22) Date of filing: 25.02.1999
(51) Int. Cl.: G06F 17/60, G06F 17/21

(54) **A sequential data display method and apparatus**

(30) Priority: 27.02.1998 JP 4674598
(71) Applicant: HITACHI, LTD., Chiyoda-ku, Tokyo (JP)
(72) Inventor: Okayasu, Satoe, Omiya-shi (JP); Tsuchiyama, Chikako, Tokyo (JP); Kumagai, Yukiko, Tokyo (JP)
(74) Representative: Calderbank, Thomas Roger

(57) **Abstract**

The data display method of this invention comprises: a storage step (6) of storing, in a storage, sequential scale data and a plurality of first event data paired with the sequential scale data, and sequential scale data and a plurality of second event data paired with the sequential scale data; and a data unfolding step (63) of, when the same scale data as the scale data paired with one of the plurality of the second event data is not paired with the first event data, inserting a null at that location in the plurality of the first event data which corresponds to the one second event data. This data display method can display desired items of the sequential data side by side. A control can be added to this method to suppress display of those event data whose item number has exceeded a predetermined limit on the item number of the event data to be displayed in a column of one scale data.

## Description

The present invention relates to an apparatus and method for displaying two or more documents or data side by side for comparison.

Among apparatuses for displaying two documents there have been known apparatuses which display original sentences and translated sentences in one-to-one correspondence or display old and new documents of statutes side by side for comparison.

In displaying two documents in a comparative manner, it is a prerequisite that the document data to be compared be structured and stored such that the data can be managed according to document building units, such as paragraph and sentence, or chapter, clause and item. This technically allows corresponding constitutional elements of the two documents to be displayed for comparison. Such a technique is described in JP-A-5-307564.

Consider a case, however, where the numbers of constitutional elements of two documents are not equal or where the time scales of comparison axes are not equal. For example, when the number of events that occurred in a certain year is two in a country A and one in a country B, then it is not possible to display side by side in a corresponding manner the events that occurred in the following years in the countries A and B.

Further, when comparing histories of individual people, it is not possible to display their histories in a comparative way according to the dates that events occurred, except in special cases as when comparing persons who were born on the same date.

It will be impossible to describe global events such as phenomena of stock markets with the time sequential relations among the events that have occurred in various countries simply based on local times of individual countries.

Here, the local time refers to a time of a predetermined reference point in each country (region). In Japan this is the time on a meridian passing through Akashi. The standard time, on the other hand, is a Greenwich Time, an internationally recognized standard time.

An object of the present invention is to provide a document data comparative display apparatus capable of eliminating the above described drawbacks. Another object of this invention is to provide a document display apparatus which can display two or more document data side by side on a single time axis, and which can adjust display start points (address information representing, for example, line or column numbers and positions) of events, which comprise each document, according to externally supplied synchronization conditions to display two documents in a comparative way.

To achieve these objects, this invention uses a data display apparatus which comprises: a storage component for storing, in a storage, sequential scale data and a plurality of first event data (A) paired with the sequential scale data, and sequential scale data and a plurality of second event data (B) paired with the sequential scale data; a data unfolding component for, when the same scale data as the scale data paired with one of the plurality of the second event data is not paired with the first event data, inserting a null at that location in the plurality of the first event data which corresponds to the one second event data; a data unfolding component for, when the same scale data as the scale data paired with one of the plurality of the first event data is not paired with the second event data, inserting a null at that location in the plurality of the second event data which corresponds to the one first event data; and display components for parallelly displaying on a display the plurality of the first event data and the plurality of the second event data according to a scale of the sequential scale data.

In accordance with the present invention, there is provided a data display apparatus comprising:
a storage component for storing, in a storage, sequential scale data and a plurality of first event data paired with the sequential scale data, and sequential scale data and a plurality of second event data paired with the sequential scale data;
a data unfolding component for, when the same scale data as the scale data paired with one of the plurality of the second event data is not paired with the first event data, inserting a null at that location in the plurality of the first event data which corresponds to the one second event data;
a data unfolding component for, when the same scale data as the scale data paired with one of the plurality of the first event data is not paired with the second event data, inserting a null at that location in the plurality of the second event data which corresponds to the one first event data; and
display components for parallelly displaying on a display the plurality of the first event data and the plurality of the second event data according to a scale of the sequential scale data.

The above data display apparatus may include a control component for performing control so as to suppress display of those event data whose item number has exceeded a predetermined limit on the item number of the event data to be displayed in a column of one scale data.

In another aspect of the invention, there is provided a data display method comprising:
a step (62) of reading a plurality of files, in each of which are stored a plurality of records (54) each having scale data (41) with some ordering characteristic and event data (42-44) paired with the scale data;
a step (65) of displaying side by side event data stored in the different files and having certain scale data; and
a step (64) of limiting, according to a limit value, the number of lines, or the size, of the event data having the scale data. This method may comprise:
a step (73) of comparing the scale data having some ordering characteristic with a scale; and
a step (74-76) of setting a display position of the event data according to a result of the comparison. period with range from event data with time data closest to a start time of the period to event data with time data closest to an end time of the period. It is possible to use a predetermined fixed value as a limit on the amount of the event data to be displayed in a certain period of time.

In another aspect of the present invention, there is provided a program file stored in a storage connected to a computer and read and executed by the computer, comprising;
a step of storing, in a storage, sequential scale data and a plurality of first event data paired with the sequential scale data, and sequential scale data and a plurality of second event data paired with the sequential scale data;
a data unfolding step of, when the same scale data as the scale data paired with one of the plurality of the second event data is not paired with the first event data, inserting a null at that location in the plurality of the first event data which corresponds to the one second event data;
a data unfolding step of, when the same scale data as the scale data paired with one of the plurality of the first event data is not paired with the second event data, inserting a null at that location in the plurality of the second event data which corresponds to the one first event data; and
display steps of parallelly displaying on a display the plurality of the first event data and the plurality of the second event data according to a scale of the sequential scale data. This program file may comprise a control step of performing control so as to suppress display of those event data whose item number has exceeded a predetermined limit on the item number of the event data to be displayed in a column of one scale data.

This invention can be is realized on an information processing device which comprises at least a storage device, a processing device, input/output devices and buses or cables connecting these devices.

The input/output devices refer to general input/ output devices used in connection with computers, including output devices such as display and printer, input devices such as keyboard and mouse, an input control device for reading data from storage devices such as hard disk, FD and CD-ROM, and connecting devices for connecting to a network.

The storage device refers to storage media, such as hard disk, FD and CD-ROM as described above, which store information defining a display format and document data. Similar information may be stored in other storage devices connected to a network and be accessed through the network.

The document data has a pair of at least time data of an event occurred and event data. A plurality of related events are stored and managed as one document data. The document data managed in this way is hereinafter referred to as chronological data or sequential data.

The display format refers to a parameter used when outputting a plurality of chronological data to display or printer and defines, for example, a display start point of each chronological data and selection conditions of data for display.

Further, the storage device stores a program containing the following processing steps. These steps include a step for reading the display format defining information and the chronological data, a step for editing the chronological data according to the display format defining information, and a step for outputting the edited result to the output device.

The chronological data reading step sorts the events of each chronological data in a chronological order or time sequential order and assigns symbols or numbers to the individual events so that the events can be referenced by symbols or numbers. The chronological data editing step determines a form of display according to the display format read in and sequentially unfolds the event data, which was read in previously, according to the display format.

The result of unfolding operation is output as is to an output device (display or printer) by the output step.

With the above operations, it is possible to display side by side those event data contained in a plurality of chronological data which have the same time data, with the time of event occurrence taken as a common axis.

A step of synchronized display of this invention can include at least an operation, such as described above, which displays events of chronological data having the same time data side by side. Depending on the form in which the time data is expressed, a decision on whether the time data are equal or not is made as follows. That is, the time data are decided to be the same in the following cases: when the time data agree in all parts-year, month, day and hour parts; when they agree in only a year part; when they agree in year and month parts; and when they agree in year, month and day parts.

Further, provision of display start points makes it possible to display side by side those events of different chronological data which occurred after different display start points or times and which have the same elapsed times from the different display start points, with the elapsed time taken as a common axis..

The synchronized displaying step of this invention can include an operation, such as described above, which displays events of chronological data having the same elapsed times side by side. Depending on the form in which the time data is expressed, a decision on whether the elapsed times are equal or not is made as follows. That is, the elapsed times are decided to be the same in the following cases: when the elapsed time agree in a year part; when they agree in a month part; when they agree in a day part; and when they agree in an hour part.

This invention also includes, as a display screen control method, a step of dividing the chronological data output area into unit time areas and controlling the amount of chronological data to be displayed in each unit time area according to a limit value.

The limit value may use a predetermined fixed value. It is also possible to use as a limit value the maximum number of events of the chronological data that exist in the unit time area under consideration.

The synchronized displaying step of this invention may include such a step as described above for controlling the amount of events of chronological data to be displayed.

### In the drawings

Figure 1 is a block diagram showing an example configuration of a whole system in which to implement the present invention.

Figure 2 is a table showing a form in which to store chronological data.

Figures 3A and 3B is example tables showing chronological data files.

Figures 4A and 4B show an example data configuration of a base field record and an example record.

Figure 5 is an example display field.

Figure 6 is a flow diagram showing an entire processing for displaying chronological data.

Figure 7 is a flow diagram showing the detail of a chronological data unfolding processing.

Figure 8 is a flow diagram showing the detail of a display data edit processing.

Figure 9 is a flow diagram showing a processing for editing chronological data using relative years.

Figure 10 is a flow diagram showing a processing for editing chronological data (complemented data) using relative years and maximum display length.

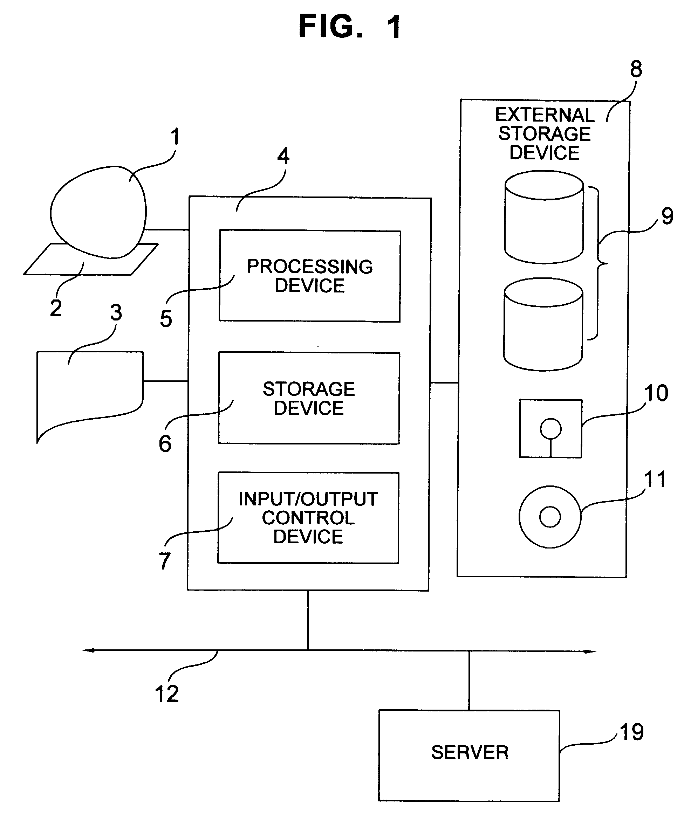

One embodiment of the present invention will be described by referring to Figures 1 through 10.

First, a configuration of the information processing system embodying this invention will be outlined with reference to Figure 1.

An information processing device 4 includes at least a processing device 5, a storage device 6 such as memory and disk, and an input/output control device 7. The information processing device 4 also is connected with output devices such as display 1 and printer 3 and with input devices such as mouse and keyboard 2. The storage device 6 stores a program that has a processing functions characteristic of this invention. It may also store chronological data and a display format of the chronological data.

An external storage device 8 includes such storage devices as hard disk 9, floppy disk 10, and CD-ROM 11, each of which can be accessed by the information processing device 4. The external storage device 8 is used mainly to store chronological data.

The information processing device 4 may be configured so that it is connected to a communication network 12 to retrieve information such as chronological data from a server 19 on the network.

The processing device 5 reads chronological data from the storage device 6, the external storage device 8 or the network server and unfolds the result as a base field on the storage device 6. Then, based on information specified by a user as a display format, or on initial values of a display format made available by this system, data on the base field is edited and unfolded as a display field on a storage means such as memory. The result of this editing and unfolding is output to the output devices such as display 1 and printer 3 through the input/output control device 7.

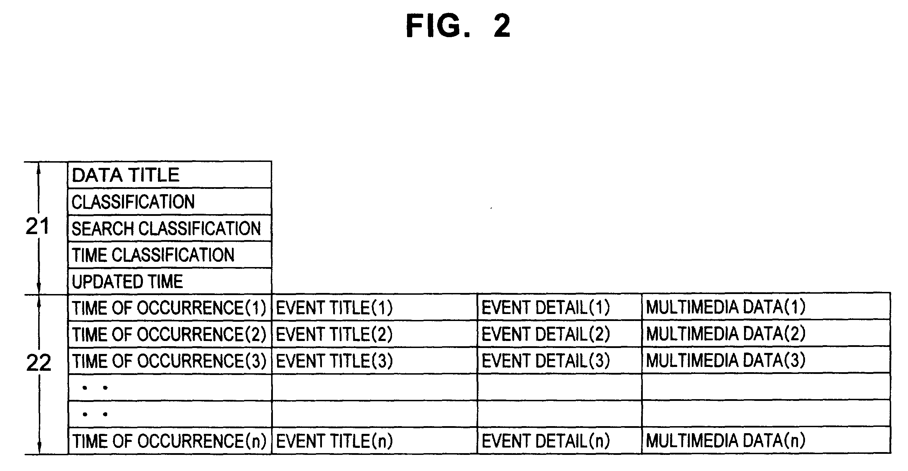

In the following embodiment, a case will be explained where chronological data used as an example of sequential data of this invention is displayed in a comparative manner. Figure 2 shows a storage format for the chronological data. The chronological data comprises a header section 21 and a data section 22. The header section 21 may include a title of chronological data, a classification indicating a kind of chronological data, a search classification used to search through chronological data, a time classification indicating whether the time data incorporated in the chronological data is a standard time or a local time, and an update time indicating date and time when the chronological data was updated. Other examples of sequential data that can be displayed include data of a short duration related to a time scale, such as measured data and video data taken continuously for a certain period of time by a monitor camera.

The classification is an area for storing a symbol indicating the type of sequential data. In this embodiment the classification contains a symbol indicating that this file stores chronological data. The search classification may be used to sort and display chronological data by using software that can browse the chronological data. A person preparing the chronological data can freely store in this search classification a plurality of key words such as "personal history" and "regional history," or "studying abroad" for data concerning persons who have been in foreign countries for study. The data section 22 has each line allocated to one record. The data section 22 can include a time when an event occurred, an event title, an event detail, and multimedia data such as image data and voice data. The data section 22 may also include the following information: a command line to start other application software (word processor software, spread sheet software, etc.), and information necessary for the user to connect to the information processing device 4 or the communication network 12 to start and establish a variety of communication systems (mail, chat, electronic vote, electronic conference, etc.) with other processing devices.

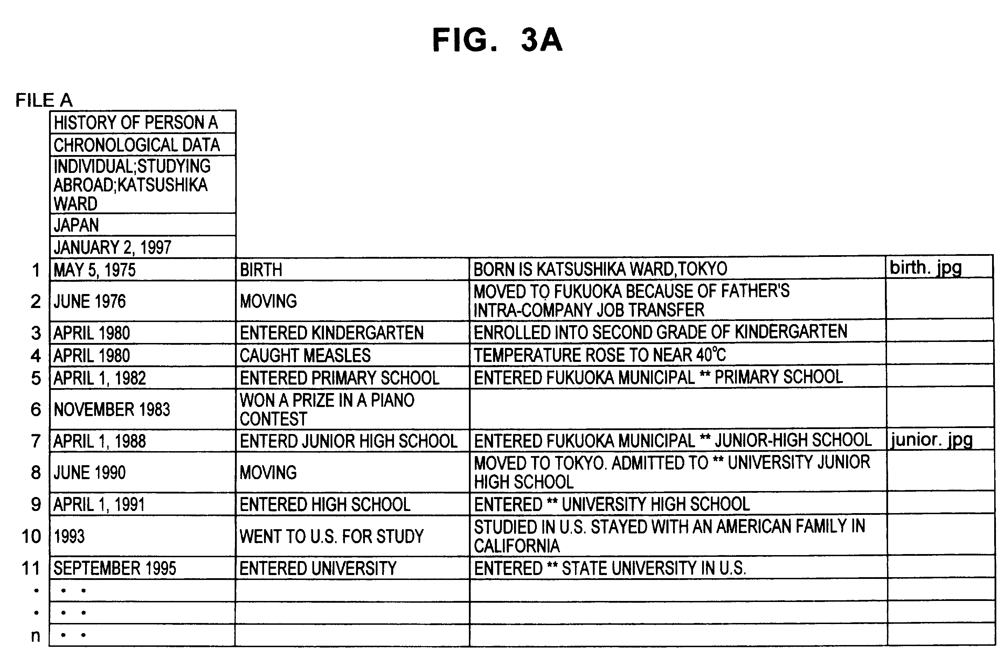

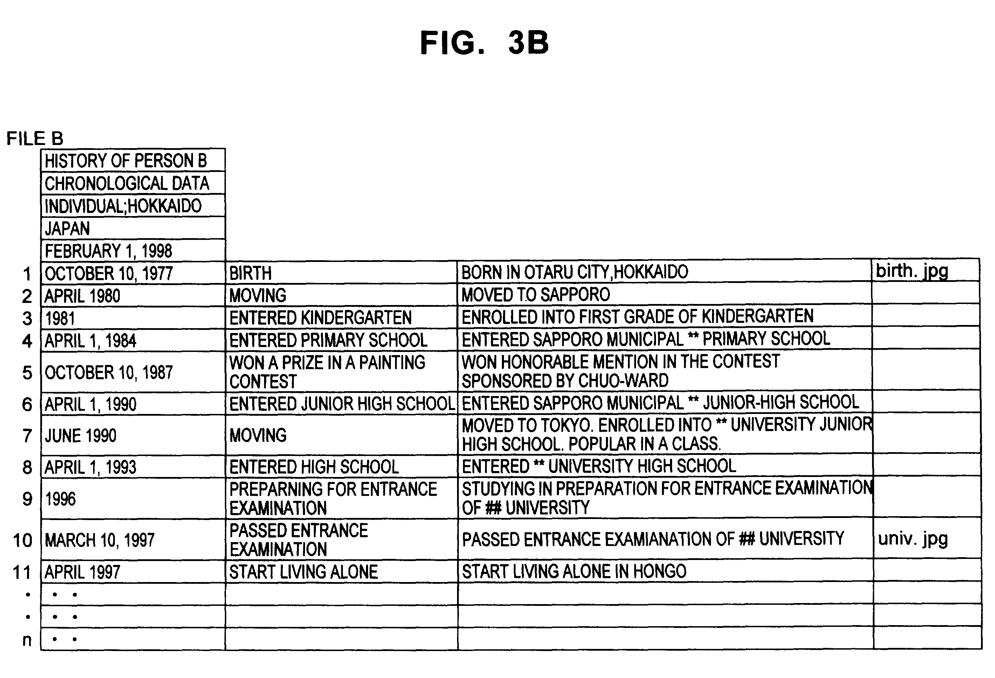

Figures 3A and 3B show chronological data files A and B stored in the storage format of Figure 2. In this embodiment, it is assumed that the file A and file B are stored in a hard disk 9 of the external storage device 8. Figures 3A and 3B show numbers 1 to n and 1 to m to represent the record numbers of the data section for the sake of explanation.

In the case of the file A, the title of the chronological data is "history of person A." Because the search classification contains "individuals, studying abroad, Katsushika-ward," it is seen that the file A can be extracted by three keywords: personal history, studying abroad and Katsushika-ward. The first record in the data section shows that person A "was born in Katsushika-ward, Tokyo on May 5, 1975," with a word "birth" entered in the event title, a text data "born in Katsushika-ward, Tokyo" entered in the event detail, and a file entitled "birth.jpg" stored as an image in connection with this record.

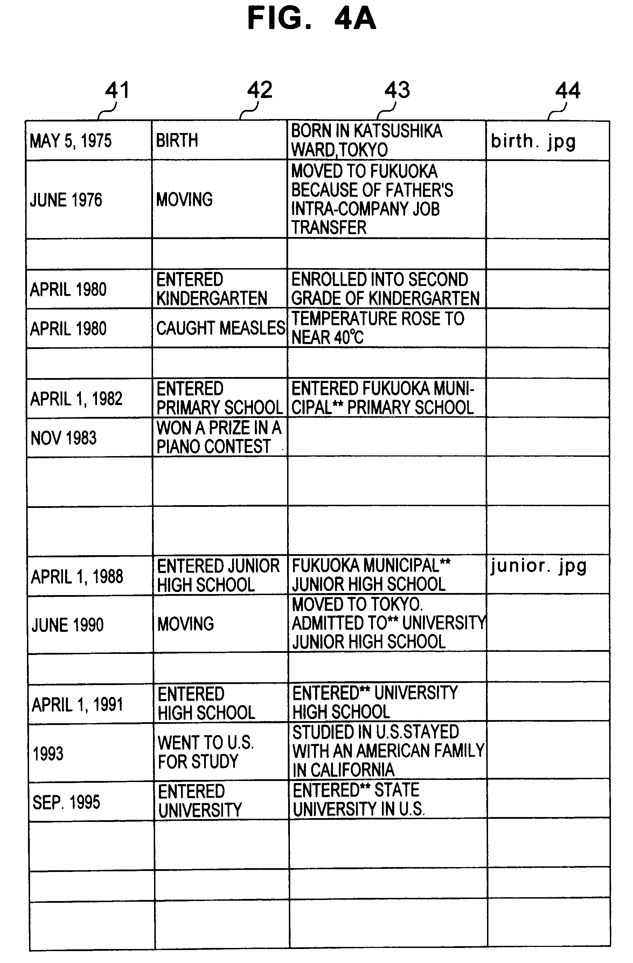

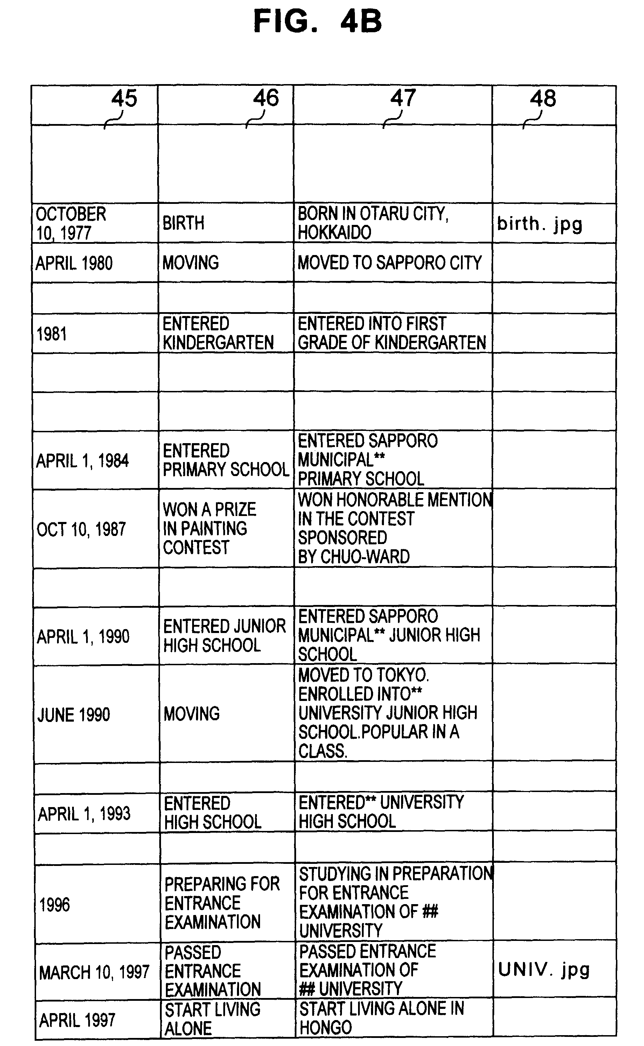

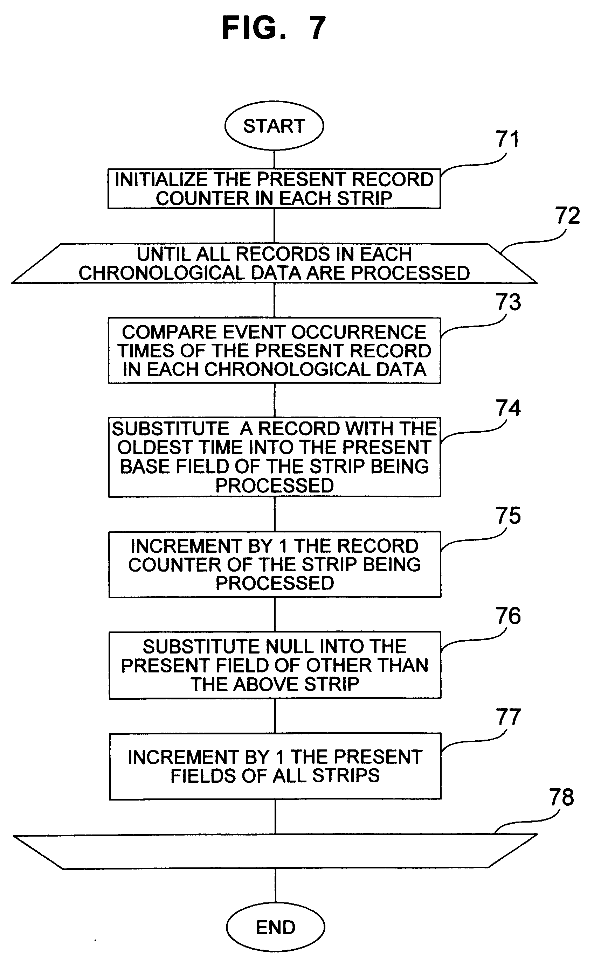

Figures 4A and 4B show the data format and the stored data after the chronological data of the file A and the file B of Figure 3 are unfolded on the storage device 6 according to the flow of Figure 7. Columns 41, 42, 43, 44 represent the unfolded data section of the file A. Similarly, Columns 45, 46, 47, 48 represent the unfolded data section of the file B. Each line is treated as one record. In the following, each record of Figure 4 after being unfolded on the storage device 6 is called a base field record. In both the file A and file B, the four data items arranged laterally in one record can be referenced as one data by using a record number. That is, by using the current base field records, it is possible to manage information on events contained in the file A and file B that occurred at a certain time. In the process of comparing the field 41 and the field 45, if the events that occurred at a certain time are associated only with the file A, a NULL is placed in the record area associated with the file B. In Figures 4A and 4B, NULLs are represented by blank blocks.

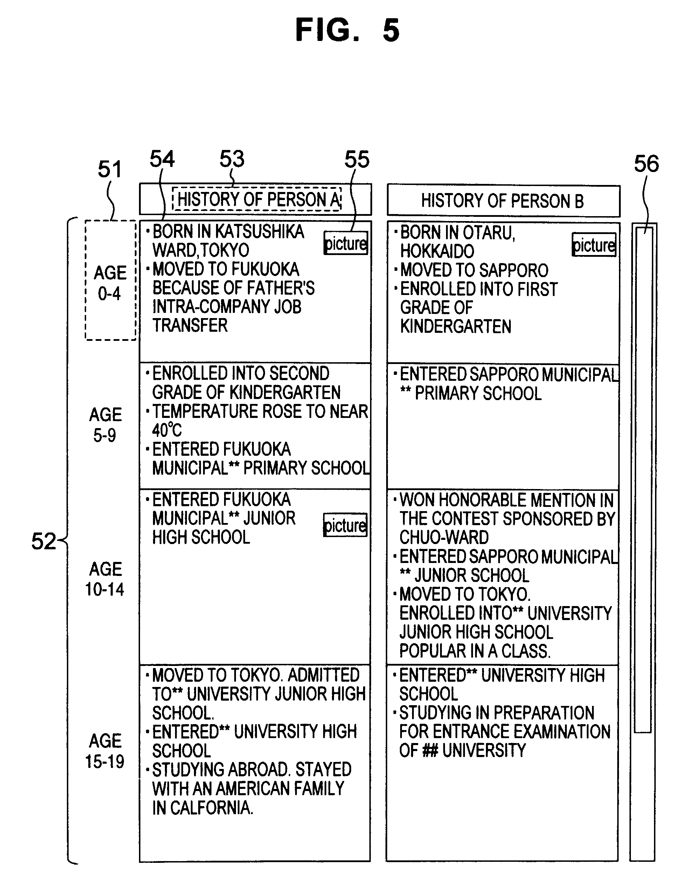

Figure 5 shows an example result of editing the base field records of Figure 4 according to the display format and unfolding them on the display field. This display format comprises a strip area 52 to which a time axis 51 and the base field records are output, a chronological data title output area 53, and a scroll bar 56 of the screen. A plurality of strip areas 52 can be output side by side on a single screen, with each strip area 52 representing one chronological data. In the case of Figure 5 the strip areas for the file A and the file B are arranged side by side laterally. It is understood that two or more strip areas may be arranged in either a vertical or a horizontal direction. The presence of blank blocks in Figures 4A and 4B ensures that the starting positions of the age 5-9 field for person A and person B are aligned even though the number of items in the age 0-4 field of person A is different from the number of items in the age 0-4 field of person B.

The strip area 52 can include: a text output area 54 to which an event title of a base field record or an event detail in the form of text is output; and a mark output area 55 to which a mark representing the location of an image file is output. Which of the event title and the event detail is to be output to the text output area 54 can be defined by the user in the form of display format. It is readily understood that horizontal lines and frame lines in the strip area 52 do not need to be displayed. This also applies to the scroll bar 56.

The mark output area 55 may include, in addition to the mark indicating the location of an image file, icons for starting the above mentioned applications (word processor and spread sheet applications) and for starting communications with other processing devices. It may also display addresses of other associated sites in the Internet. Selecting a desired displayed icon or address display area with a pointing device such as mouse allows the user to reference the image data, document data, spread sheet data or other associated site in the Internet, or exchange information with other processing devices.

Each of these areas (refer to Fig. 5; 54) contains a current pointer (not shown) for the records unfolded in the base fields. Hence, the display field is an area where the data to be displayed on the screen is unfolded by referencing the base field as shown in Fig. 5. When changing the contents to be displayed, the display field is rewritten and is referenced by the operating system which in turn outputs the rewritten contents to an output device such as display.

As described above, unfolding the display field on a storage device of memory that has a relatively short access time offers the advantage of a reduced display time. Further, where the amount of data to be displayed is large or where data editing after data display is performed frequently, a method may be adopted which uses a relational database to manage the display fields as the records on the database or which unfolds a spread sheet on a hard disk for managing the data.

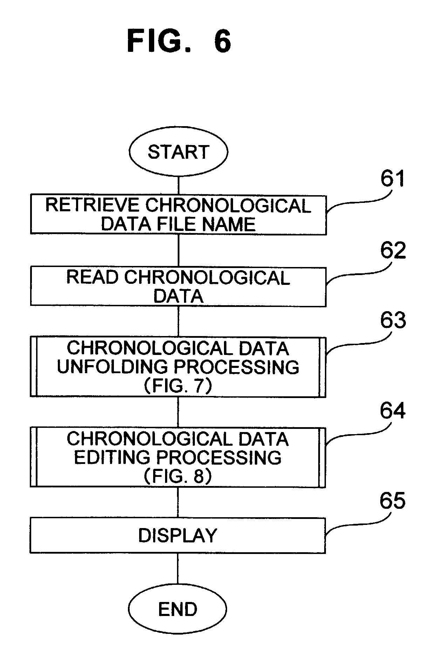

Figures 6, 7, 8 and 9 are flow charts of the processing of the above embodiment. This embodiment realizes these processing in the form of programs and stores them in the storage device 6 so that they are executed by the processing device 5.

Figure 6 shows an overall flow of the processing for displaying the chronological data. A step 61 is an operation to retrieve a file name of the chronological data to be processed. It is assumed that a user using the information processing device 4 has already selected two or more file names of the chronological data he or she wants displayed, and that the selected file names are stored in the storage device 6.

Next, a step 62 represents an operation to access the chronological data file according to on the file name retrieved by the step 61 and to read the header section 21 and the data section 22 sequentially.

A step 63 arranges in chronological order the two or more chronological data read in, and unfolds them into a plurality of base field records. The result of unfolding is stored in the storage device 6 such as disk. The detail of the processing will be explained by referring to Figure 7.

A step 64 edits the base field records unfolded by the step 63 into a display data format. The result of editing is output as display fields to the storage device 6 such as memory.

A display step 65 outputs to a display or printer the data that was placed on the memory by the step 64.

These steps can also be activated independently of each other by the specification from the user. When, for example, a change in the display format is specified from an input device such as keyboard or mouse, the step 64 for editing the display data is executed, followed by the display step 64.

Figure 7 shows the detail of the chronological data unfolding operation performed by the step 63.

A step 71 is an operation to initialize a plurality of current record counters corresponding to all the chronological data.

Steps 72 to 78 are repeated until all the records of each chronological data are processed. A step 73 compares the times of the current records of all the chronological data. According to the result of comparison made by the step 73, a step 74 substitutes the chronological data record with the oldest time into the current record of the base field strip that is being processed. When there are a plurality of chronological data records with the same times, these chronological data records are substituted into the current records of the associated base field strips.

A step 75 increments by one the current record counter of the chronological data that was processed by the step 74. A step 76 substitutes NULL into the base fields of the strips other than the strip of the chronological data processed by the step 75. A step 76 increments the base field counters of all strips by one.

As a result of the above processing, all the chronological data are arranged and stored in chronological order on the base fields.

Figures 4A and 4B represent example cases in which the chronological data of Figures 3A and 3B are unfolded onto respective series of base fields according to the process flow of Figure 7. For example, the fourth records both have the same times of April 1980, so that the information is stored in both file A and file B. If there is any record in Figure 3A or 3B that has image data, the image data is also stored in the corresponding area in the base field.

When the data stored in the time field has only year data, the processing is done by assuming that the time is January 1. When the time data stored in the time field is expressed in the local time that is used in a region where the chronological data was prepared and when the chronological data spanning several regions is to be displayed, the times may be converted into standard times before processing. This makes it possible to precisely determine the chronological relation among times of the events occurred.

It is assumed that the data sections of the chronological files shown in Figures 3A and 3B are arranged in a chronological sequence beforehand. If they are assumed otherwise, an operation to sort the data section of each chronological file with a time as a key is inserted at the start of the flow of Figure 7.

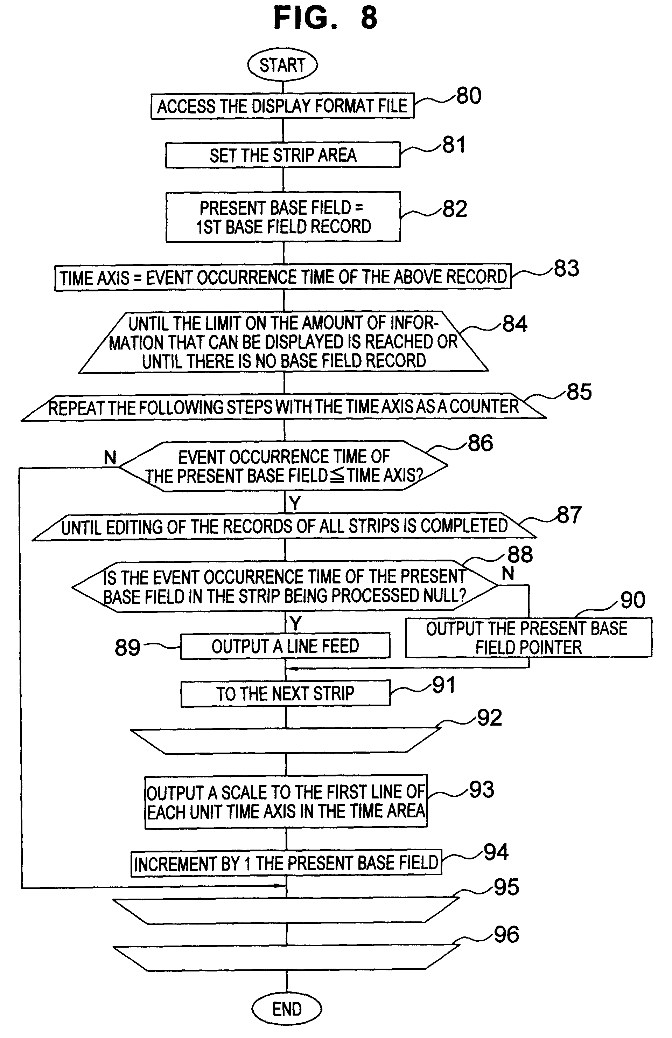

Figure 8 shows the processing performed when a display format is specified which displays all chronological data with the same times of occurrence horizontally in line with the time used as a key. It is also assumed that a display format (maximum length display format) is specified which, when different strip areas in the same period have different numbers of events, takes the display position of the strip having the largest number of events as a reference and shifts the display positions of other strips downward to a position parallel to the beginning of the strip following the reference strip. That is, this embodiment defines "displaying in synchronism" as shifting the strips of chronological data according to the maximum length display format when displaying them.

A step 80 accesses the display format file stored in the storage device 6 to retrieve the display format specified by the user. The display format file stores at least names of chronological files to be displayed. In addition, the above display formats are coded and stored in the file. The display format file can also store, according to the specification by the user, selection information specifying which of the event title and the event detail shall be displayed and also selection information indicating whether to selectively display only those data with time recorded in year, or display those data with time recorded down to month, or display those data with time recorded down to day of the month or down to year, month, day, and hour. If these information are not specified by the user, initial values provided in this embodiment is used.

A step 81 generates strip areas 52 of the display fields. Based on the number of chronological files retrieved by the step 80, the step 81 generates the same number of strip areas as the number of files.

A step 82 sets the reference record number of the base field (current base field) to a first record. A step 83 substitutes time, which is a data item stored in the record of the current base field, into the time axis which is a variable. In the case of Figure 4, the time of the first base field is May 5, 1975 in the file A and the time of the third base field is April 1977 in the file B.

A step 84 repetitively performs a series of operations up to a step 96 until the limit of information amount that can be stored in the display field is reached or until there are no base field records.

A step 85 repeats a series of operations up to a step 95 with the time axis, which is a variable, taken as a counter.

A step 86 compares the time of the current base field and the time axis and, when the former is younger, executes a step 87. When the latter is younger, the time axis is incremented by one. The incrementing unit may be any desired length of time, such as 1 year, 10 years and 100 years or 1 month, 1 week and 1 day. If the incrementing unit is set to three months, each increment can represent one of four seasons of the year.

A step 87 repeats a series of operations up to a step 92 until editing of all strips is finished. When the processing of all strips is completed, a step 93 outputs a scale to the first line of the time axis in the time area. Next, a step 94 increments the current base field by one.

A loop processing following the step 87 will be explained.

A step 88 checks whether or not the time of the current base field of the strip is NULL. If it is found to be NULL, a step 89 outputs a line feed to the current record of the display field. If it is not NULL, a step 90 outputs a pointer indicating the record of the current base field to the current record of the display field. A step 91 proceeds to the processing of the next strip.

When the processing of one record is completed, the record of the current base field is incremented by one and the program proceeds to the processing of the next record.

While Figure 8 shows the maximum length display as an example, it is possible to output a fixed number of lines in a unit of the time axis (fixed length display). In this embodiment the fixed length display is defined as the "synchronized display." In that case, the following processing needs to be added to Figure 8.

That is, a line counter, which is a variable for counting the number of lines, is used and initialized between the step 85 and the step 86. The line counter is incremented by one between the step 92 and the step 93. Further, the condition of the step 86 is changed as follows.

"The time of the current base field is equal to or less than the time axis and is smaller than the maximum number of lines that the line counter can display."

It is also possible to make the length of display equal to the length of a certain strip (main strip) (fixed strip display). This embodiment defines the synchronized display as the fixed strip display. In that case, the following change needs to be added to Figure 8.

First, the condition of the step 86 is changed as follows.

"The time of the base field of the main strip is less than the time axis."

Further, for the repetitive processing following the step 87, the main strip is taken as the first strip to be processed.

The repetitive processing following the step 84 leaves the loop when there is no data of the base field in the main strip.

The above processing flow has been explained on the assumption that each record of the base field always has at least one information (event title, event detail, multimedia data) on the event. For example, in Figure 4B, the time of the third record is October 10, 1977 and event information exists only in the file B. The time of the fourth record is April 1980 and the event information exits both in the file A and the file B. Although there is actually a time lapse of more than 2 years between the third and the fourth record, this is ignored on the base field. On the other hand, it is possible to insert between the third and the fourth record two additional records with times of 1978 and 1979 which have no event information (i.e., data in the file A and the file B other than the time is NULL). This allows the processing flow of Figure 8 to specify the output of two blank lines, which represent two years of time, onto the display field. It should be understood that the time period represented by one line need not be fixed at one year and that a minimum time unit to represent the time of an event may arbitrarily be set by the user.

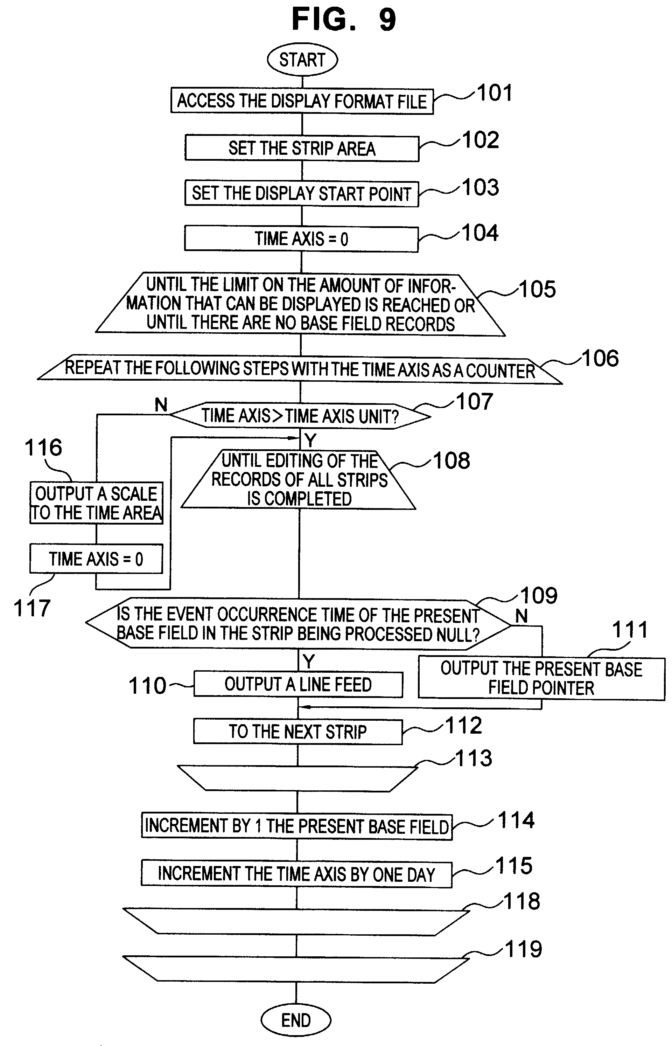

Figure 9 shows a flow of edit processing for a relative year display, in which records following a display start record specified by the user for each base field are parallelly displayed with an elapsed time from the time of the display start record used as a key. The number of lines displayed in a unit of time axis is fixed. That is, in this embodiment the synchronized display is defined as a relative year display and a fixed length display. In the processing shown in Figure 9, the records of the base fields are mapped along the time axis that is arranged with the minimum unit of time as a key. In the example of Figure 4, if the minimum unit of time is one day, a record next to the first record (with the event time of May 5, 1975) has an event time of May 6, 1975 and has NULL as the event information.

Steps 101 and 102 are similar operations to the steps 80, 81.

A step 103 sets a display start point. When it accesses the display type file, the step 103 sets the display start point, which was specified by the user for each strip, as a record number of the base field.

A step 104 initializes the time axis.

A step 105 repetitively performs a series of operations up to a step 119 until the limit of information amount that can be stored in the display field is reached or until there are no base field records.

A step 106 repeats operations from step 107 to step 118 with the time axis as a counter. A step 107 compares the time axis and the unit of the time axis. The time axis unit is five years in the case of Figure 5. When the comparison finds that the time axis is smaller than the time axis unit, a scale is output to the time axis area (step 116). When this step is executed for the first time, a phrase "0 to 4" is output. A step 117 initializes the time axis, after which the operations from a step 108 down on are executed. It may be possible for a user to specify the scale unit of the time axis beforehand. In the above example, if the scale unit of the time axis is specified as "age," then the step 116 outputs a phrase "age 0 through 4."

If, at a step 107, the time axis unit is found smaller than the time axis, a step 108 is executed. The step 108 repeats the operations from step 109 to step 113 until the editing of the records of all strips are finished.

A step 109 checks whether the time of the current base field in the strip being processed is NULL. If it is found to be NULL, a line feed is output to the display field. If not, a pointer indicating a record of the current base field is output to the display field. A step 112 moves the processing to the next strip.

When the repetitive processing up to the step 113 is finished, a step 114 increments by one the counter that indicates the record of the current base field. Further, the time axis is incremented by one.

Figure 5 shows a case where the records of the base fields of Figure 4 are unfolded onto the display field according to the processing shown in Figure 9. The following settings are assumed to have been specified beforehand by the user as the display format: the time axis unit is set to 5 years; the data to be displayed is the event detail; and the time axis scale has intervals of 5 years beginning from age 0. In this example, the display start point is specified by the user at the first record of each chronological data. Because the first records each represent the dates of birth, the user can view parallelly what person A and person B were doing at the same age.

A display format other than shown above may be adopted whereby the time data and the event title or event detail are shown listed for all strip areas. It may also be possible to display the time data of the display start point of each strip in the title output area 53. At this time, for a strip other than the base strip, a difference in the display start point time data from the base strip may be calculated and output.

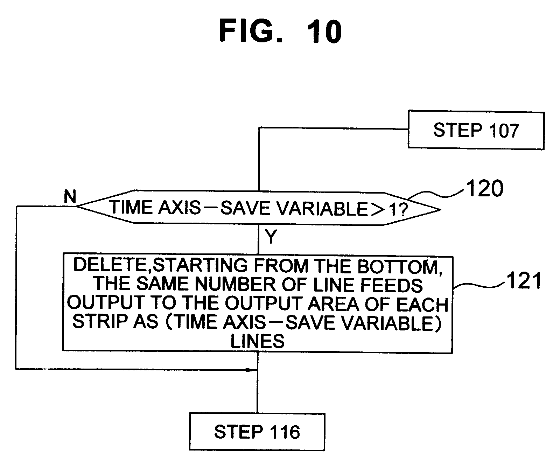

Figure 9 shows a case of the fixed length display. When data is displayed according to the arrangement of the maximum length strip, a variable for saving the time axis is used and the time axis is saved in the variable between the step 109 and the step 111. Further, steps shown in Figure 10 are inserted between the steps 107 and 116 of Figure 9. That is, a step 120 compares the time axis and the save variable, and when the difference is larger than 1, a step 121 is executed. The step 121 deletes the same number of line feeds output to each strip as (time axis - save variable) lines. When the difference is equal to or less than 1, nothing is performed.

The explanation using Figures 9 and 10 assumes that the records of the base fields are mapped along the time axis that is arranged with the minimum unit of time as a key. It is readily understood that the processing can be done similarly even when this premise is changed as follows. That is, it is assumed that every record of the base field has event data stored in the file A or the file B and that no records exist that have no event data. Therefore, when chronological data of file A which has 50 events in 1980 and no events thereafter and chronological data of file B which has 50 events in 1990 are to be displayed in synchronism in the absolute year display format, the display length of a period from 1981 to 1989 during which there is no event is displayed shorter than the display length of one year of 1980 and of 1990.

In the above embodiment, the chronological data may be stored in external storage devices such as hard disk, CD-ROM and FD and then read into the information processing device. It is also possible to store the chronological data in a server on the network and to display a list of files by an Internet browser from which desired chronological data may be selected for display.

Although in the above embodiment, the chronological data is arranged and displayed in a chronological sequence, beginning with the oldest event toward the latest event, the order of display may be reversed starting from the latest event. The latter method of display is also included in this invention. Further, while we have shown a case where the time sequential relation among the records is determined by using time data stored in the data section 22, the data by which to determine the time sequential relation need not be the time data and it is possible to provide a new data item that simply defines the order of records. In that case, the time sequential relation among the records in one file is determined by using data that indicates the order. Further, the user may set the time sequential relation among the records in each file to display a plurality of chronological data in synchronism.

While the above embodiment concerns a case where only past events are stored as the chronological data, events that will occur in the future may also be stored in the similar form. The future events may include measures that will be taken in the future by municipalities. If the measures are stored as events in the chronological data file according to the format shown in Figure 2 so that they can be referenced by residents, opinions of residents about the measures can easily be gathered.

A display level, "year" or "year and month" or "year, month and day," may be provided as an item in the display format that the user can specify. This is a display format that specifies the level of detail of the time data stored in the event occurrence time and whether or not to display the time data.

For example, the display level "year" selectively displays those records which have year data in the event occurrence time. If a record has "1998" as the event occurrence time and "opening of the Nagano Olympics" as the event detail, this record is displayed. If the time is "February 1998" and the event detail is "opening of the Nagano Olympics" and if the display level specified is "year," then this record is not displayed. This record is controlled to be displayed when the display level specified is "year and month" or "year, month and day." Such a control step needs only to be incorporated into the chronological data editing processing shown in Figures 8 and 9. When the user wishes to know a rough flow of the chronological data, he or she should select "year" as the display level. Conversely, when the user wants to know a detailed flow, he or she needs to select "year, month and day" for the display level. In that case, all the data stored in the chronological file are displayed.

Although in the above embodiment the time used to select a display level is expressed in the Christian era, it is possible to use the Japanese era format. Further, the data stored in the form of Christian era can be edited into the form of Japanese era before being output. The methods including these processing are also covered by this invention.

It is obvious that, in order to display the chronological data according to the above display method, this invention has a function to edit the chronological data and scale data distributed over the network or stored in the storage media, such as hard disk, FD and CD-ROM. The device for editing these data may be included in the information processing device that displays data according to the above display method or in other information processing devices made available for use by people on the network.

The synchronized display methods realized by this invention include: a method which arranges in order events of a plurality of chronological data with time used as a common key and displays the ordered events side by side; and a method which arranges in order events of a plurality of chronological data by setting different times as display start points and using elapsed times from the display start points as a key and then displays the ordered events side by side. While the above embodiment shows an example case where event data are displayed in synchronism with the time data taken as a scale, this invention can also handle those data which has some scale, such as magnitude, alphabet and color spectrum, that can be used in ordering events.

Further, since the size of the display area for the chronological data is determined based on the number of lines of the event data, it is possible to display all event data even when the number of event data is large or to display them by limiting the event data to such an amount as will fit in a predetermined fixed size.

It is readily understood that a series of steps of this invention may be downloaded over a communication line into the storage device 6, or may be input to a storage medium which is then mounted in an external storage device to transfer the steps into the storage device 6, and that these steps can be executed by the information processing device.

## Claims

1. A data display apparatus comprising:
a storage component (6) for storing, in a storage, sequential scale data and a plurality of first event data paired with the sequential scale data, and sequential scale data and a plurality of second event data paired with the sequential scale data;
a data unfolding component (63) for, when the same scale data as the scale data paired with one of the plurality of the second event data is not paired with the first event data, inserting a null at that location in the plurality of the first event data which corresponds to the one second event data;
a data unfolding component (63) for, when the same scale data as the scale data paired with one of the plurality of the first event data is not paired with the second event data, inserting a null at that location in the plurality of the second event data which corresponds to the one first event data; and
display components (64, 65) for parallelly displaying on a display the plurality of the first event data and the plurality of the second event data according to a scale of the sequential scale data.

2. A data display apparatus according to claim 1, further comprising a control component for performing control so as to suppress display of those event data whose item number has exceeded a predetermined limit on the item number of the event data to be displayed in a column of one scale data.

3. A data display method comprising:
a step (62) of reading a plurality of files, in each of which are stored a plurality of records (54) each having scale data (41) with some ordering characteristic and event data (42-44) paired with the scale data;
a step (65) of displaying side by side event data stored in the different files and having certain scale data; and
a step (64) of limiting, according to a limit value, the number of lines, or the size, of the event data having the scale data.

4. A data display method according to claim 3, further comprising:
a step (73) of comparing the scale data having some ordering characteristic with a scale; and
a step (74-76) of setting a display position of the event data according to a result of the comparison.

5. A data display method according to claim 3, further comprising:
a step of comparing the scale data having some ordering characteristic with a scale; and
a step of setting a display position of the event data according to an elapsed time from the scale data having some ordering characteristic, the scale data representing a display start point provided in each file.

6. A data display method according to claim 3, further comprising:
a step of using, as a limit on the amount of event data to be displayed in a certain period of time, the number of lines of those event data having their time data within the period which range from event data with time data closest to a start time of the period to event data with time data closest to an end time of the period.

7. A data display method according to claim 3, wherein a limit on the amount of event data to be displayed in a certain period of time uses a predetermined fixed value.

8. A sequential data display method comprising:
a step (61) of reading two or more sequential data, each of which comprises a pair of at least time data and event data, and information defining a display format of the sequential data, and storing the event data thus read in into a storage according to a result of comparing the time data; and
an unfolding step (63) of parallelly editing the event data stored in the storage according to the display format and unfolding the edited event data onto corresponding display fields; and
a display step (65) of displaying on a display section according to the time data the event data unfolded on the display fields.

9. A sequential data display method according to claim 8, wherein when a display start point is set in each of a plurality of sequential data, the event data following the display start points are unfolded on the display fields by taking elapsed time from the display start points as a common axis.

10. A sequential data display method according to claim 8, further comprising a step of matching the number of lines of the event data to be displayed in a certain period of time to the number of lines in the storage spanning the certain period, adjusting a start position of a period next to the certain period, and displaying the event data.

11. A sequential data display method according to claim 8, wherein a limit is placed on the number of lines of the event data to be displayed in a certain period of time; wherein when the sequential data having the event data in an amount exceeding this limit is displayed, blank lines in the storage are deleted; wherein when the limit is still exceeded, only that portion which does not exceed the limit is displayed.

12. A sequential data display method according to claim 8, further comprising a step of deleting those event data whose time data description is more detailed than a specified level.

13. A sequential data display method comprising:
a step of read a plurality of files each storing a plurality of records, each of the records comprising a pair of at least time data and event data;
a step of displaying side by side those event data stored in the different files which have the same time data; and
a step of performing control when the number of lines, or the size, of the event data to be displayed in a certain period of time exceeds a limit.

14. A sequential data display method according to claim 13, further comprising a step of comparing the time data and setting the display positions of the event data.

15. A sequential data display method according to claim 13, further comprising a step of comparing the time data and setting the display positions of the event data according to an elapsed time from the time data representing a display start point provided in each file.

16. A sequential data display method according to claim 13, wherein a limit on the amount of the event data to be displayed in a certain period of time uses the number of lines of those event data having their time data within the period which range from event data with time data closest to a start time of the period to event data with time data closest to an end time of the period.

17. A sequential data display method according to claim 13, wherein a limit on the amount of the event data to be displayed in a certain period of time uses a predetermined fixed value.

18. A program file stored in a storage connected to a computer and read and executed by the computer, comprising:
a step (6) of storing, in a storage, sequential scale data and a plurality of first event data paired with the sequential scale data, and sequential scale data and a plurality of second event data paired with the sequential scale data;
a data unfolding step (63) of, when the same scale data as the scale data paired with one of the plurality of the second event data is not paired with the first event data, inserting a null at that location in the plurality of the first event data which corresponds to the one second event data;
a data unfolding step (63) of, when the same scale data as the scale data paired with one of the plurality of the first event data is not paired with the second event data, inserting a null at that location in the plurality of the second event data which corresponds to the one first event data; and
display steps (64, 65) of parallelly displaying on a display the plurality of the first event data and the plurality of the second event data according to a scale of the sequential scale data.

19. A program file according to claim 18, further comprising a control step of performing control so as to suppress display of those event data whose item number has exceeded a predetermined limit on the item number of the event data to be displayed in a column of one scale data.
